# EUROPÄISCHE PATENTSCHRIFT

(11) **EP 1 008 616 B1**
(45) Veröffentlichungstag und Bekanntmachung des Hinweises auf die Patenterteilung: **25.08.2004**
(21) Anmeldenummer: 99123638.1
(22) Anmeldetag: 27.11.1999
(51) Int. Cl.: C08J 3/02, C08L 83/08

(54) **W/O-Emulsionen, enthaltend aminofunktionelle Organopolysiloxane**
Aminofunctional organopolysiloxanes-containing w/o emulsions
Emulsions eau/huile contenant des organopolysilxanes aminofonctionnels

(30) Priorität: 10.12.1998 DE 19856930
(43) Veröffentlichungstag der Anmeldung: 14.06.2000
(73) Patentinhaber: Goldschmidt AG, 45127 Essen (DE)
(72) Erfinder: Eissmann, Ingrid, 45884 Gelsenkirchen (DE); Henning, Jutta, 45276 Essen (DE); Müller, Felix, Dr., 42555 Velbert (DE); Stadtmüller, Stefan, Dr., 45309 Essen (DE)

(56) Entgegenhaltungen:
- US-A- 4 973 643
- US-A- 5 716 443

## Beschreibung

Gegenstand der Erfindung sind W/O-Emulsionen, enthaltend aminofunktionelle Organopolysiloxane.

Die DE 44 24 914 A1 betrifft aminofunktionelle Organopolysiloxane, welche Gruppen der allgemeinen Formel (III)

-R²-NR³(CH₂)ₘNR⁴R⁵

aufweisen, wobei
R² einen zweiwertigen C₁- bis C₁₈-Kohlenwasserstoffrest,
R³ ein Wasserstoffatom oder einen gegebenenfalls Fluor-, Chlor- oder Brom-substituierten C₁- bis C₁₀-Alkylrest,
R⁵ einen gegebenenfalls Fluor-, Chlor- oder Brom-substituierten C₁- bis C₁₀-Alkylrest und
m die Werte 2, 3 oder 4 bedeuten.

Die aminofunktionellen Organopolysiloxane können zur Ausrüstung von organischen Fasern eingesetzt werden.

In der US 5,716,443 A werden aminofunktionelle Organopolysiloxane beschrieben, in denen die aminofunktionelle Gruppe an ein in der Kette befindliches Si-Atom gebunden ist und die Kette beidseitig mit einer Dimethyl-methoxy-silylgruppe terminiert ist. Diese Verbindungen bilden O/W-Emulsionen und keine W/O-Emulsionen

Die EP 0 450 656 A1 betrifft allgemein Autopoliturmittel und deren Bestandteile.

Im Stand der Technik sind im wesentlichen O/W-Emulsionen bekannt, die zur Herstellung von Autopolitur, Reinigungsmittel für Glaskeramikfelder, Textilbehandlungsmittel, Schuhpflegemittel, Kosmetika oder Haargel Verwendung finden. Nachteilig an der O/W-Emulsion ist, daß diese durch Aufbringen von Wasser oder Feuchtigkeit auf die behandelte Oberfläche durch Reemulsion abgespült werden kann.

Demgegenüber bestand die Aufgabe der vorliegenden Erfindung in der Bereitstellung stabiler Emulsionen, die gegenüber dem Stand der Technik unempfindlich gegen Reemulsion durch erneuten Kontakt mit Wasser oder Feuchtigkeit sind.

Die vorgenannte Aufgabe wird gelöst durch eine W/O-Emulsion, enthaltend aminofunktionelle Organopolysiloxane der allgemeinen Formeln 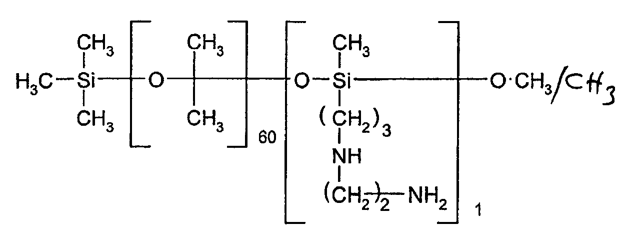 oder

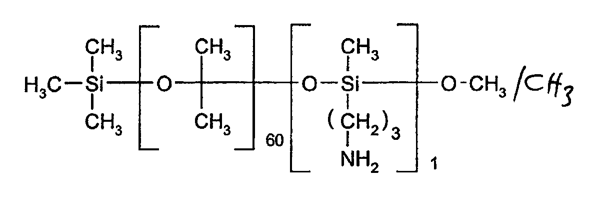

Beim Einsatz der aminofunktionellen Organosiloxane gemäß Anspruch 1 sind in der Regel keine weiteren Emulgatoren erforderlich. In vielen Fällen stellen diese Verbindungen gleichzeitig Wirkstoff und Emulgator dar, so daß die Konzentration an anderen Bestandteilen reduziert werden kann. Die erfindungsgemäß eingesetzten aminofunktionellen Organopolysiloxane fungieren somit als Selbstemulgator. Ein wesentliches Merkmal der Emulsionen besteht in dem W/O-Aufbau, der gegenüber im Stand der Technik bekannten O/W-Emulsionen den gravierenden Vorteil einer längeren Witterungsbeständigkeit aufweist. Ein Autopoliturmittel beziehungsweise ein Autopflegemittel oder eine Wachskonservierung verbleibt, gegenüber im Handel erhältlichen Produkten auf O/W-Basis, somit länger auf der Lackoberfläche, wenn diese einer feuchten Umgebung ausgesetzt ist.

Das allgemeine Herstellungsverfahren von aminofunktionellen Organopolysiloxanen ist hierzu aus der DE 44 24 914 A1 bekannt, auf die voll umfänglich Bezug genommen wird.

Besondere Vorteile für so definierte Emulsionen ergeben sich, weil bereits niedrige Konzentrationen des aminofunktionellen Organopolysiloxans zu einer hohen Emulsionsstabilität führen.

Die Menge der aminofunktionellen Organopolysiloxane gemäß Anspruch 1 kann in den erfindungsgemäßen W/O-Emulsionen in einem weiten Bereich variiert werden. Besonders bevorzugt im Sinne der vorliegenden Erfindung ist es, wenn die genannten Emulsionen 1 bis 60 Gew.-%, je nach Anwendungsbereich der genannten Organopolysiloxane, enthalten. Für den Fall, daß die Menge an Organopolysiloxanen zu gering eingestellt wird, ist keine ausreichende Emulgierwirkung zu erkennen. Andererseits sind zu hohe Konzentrationen an Emulgator zu vermeiden, da keine weiteren Rohstoffe einarbeitbar wären und die Grenze des ökonomisch vertretbaren überschritten wäre.

Besonders bevorzugt im Sinne der vorliegenden Erfindung umfassen die Emulsionen neben den aminofunktionellen Organopolysiloxanen keine weiteren Emulgatoren. Insbesondere in diesem Fall wirken die Organopolysiloxane dann als Wirkstoff und Emulgator gleichzeitig.

Die erfindungsgemäßen Emulsionen umfassen insbesondere Autopoliturmittel, Reinigungsmittel für Glaskeramikfelder, Textilbehandlungsmittel, Schuhpflegemittel, Kosmetika oder Haargel. Neben den erfindungsgemäßen aminofunktionellen Organopolysiloxanen werden in den Emulsionen an sich im Stand der Technik bekannte weitere Bestandteile eingesetzt, beispielsweise kationische Tenside, Öle, Schleifmittel, Wachse, Konditioniermittel, Farb- und Geruchsstoffe.

Ein besonders bevorzugtes Autopoliturmittel enthält beispielsweise 1 bis 10 Gew.-%, insbesondere 3 bis 5 Gew.-% der erfindungsgemäßen aminofunktionellen Organopolysiloxane. In ähnlicher Weise sollte ein Reinigungsmittel für Glaskeramik 3 bis 20 Gew.-%, insbesondere 8 bis 15 Gew.-% der erfindungsgemäßen aminofunktionellen Organopolysiloxane neben an sich bekannten weiteren Bestandteilen, insbesondere Abrasiva und Wachsen, enthalten.

### Ausführungsbeispiele:

### a) Herstellungsbeispiele

### Beispiel 1

44 g (0,23 Mol) γ-Aminopropyl-N-aminoethyldimethoxymethylsilan, Methylsilikonöl (Tegiloxan® 1000) (1000 g) und KOH (als 20-%-Lösung in Ethanol; 50 ml) wurden in einem 2-l-Reaktionsgefäß auf 90 °C aufgeheizt und bei dieser Temperatur 5 Stunden reagieren gelassen. Zur Desaktivierung des Katalysators wurden anschließend äquimolare Mengen Natriumhydrogencarbonat zugegeben und nochmals 4 Stunden auf Temperatur gehalten. Anschließend wurden durch Anlegen von Vakuum (20 - 30 mbar) und kurzzeitige Temperaturerhöhung auf 120 °C flüchtige Bestandteile abgetrennt.

Nach Filtration erhielt man eine farblose Flüssigkeit mit einer Viskosität von etwa 100 mPas [25 °C], der laut ¹H- und ²⁹Si-NMR-Spektren die nachstehende Formel zukommt

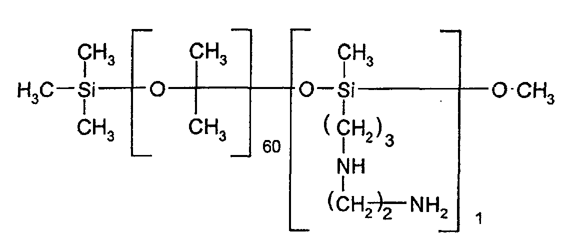

Der Amingehalt betrug 0,6 Gew.-%.

### Beispiel 2

40 g (0,21 Mol) γ-Aminopropyl-diethoxymethylsilan, Methylsilikonöl (Tegiloxan® 1000) (1000 g) und Tetramethylammoniumhydroxid^{*} 5 H₂O (0,05 g) wurden in einem 2-l-Reaktionsgefäß auf 90 °C aufgeheizt und bei dieser Temperatur 10 Stunden reagieren gelassen. Zur Desaktivierung des Katalysators wurde anschließend für 2 Stunden 150 °C unter Vakuum (10 - 20 mbar) erhitzt und dabei gleichzeitig flüchtige Bestandteile destilliert und anschließend filtriert.

NMR-analytische Daten der farblosen Flüssigkeit mit einer Viskosität von etwa 80 mPas [25 °C] entsprachen der folgenden Struktur

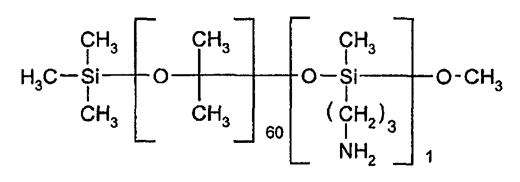

Der Amingehalt betrug 0,3 Gew.-%.

Für die nachfolgenden Beispiele, insbesondere die Glaskeramiksowie Autopflegemittel galt: keine Zusatzstoffe, wie Emulgatoren und Verdicker.

### Anwendungsbeispiele:

### Beispiel 3:

### Pflegeemulsion für Glaskeramikfelder

| | |
|---|---|
| 15,0 % | Aminosiloxan gemäß Beispiel 1 (0,6 % N) |
| 5,0 % | Decamethylcyclopentasiloxan (TEGO®Polish Additiv 5) |
| 10,0 % | Methylsilikonöl (TEGILOXAN®350) |
| 20,0 % | Abrasiv (Sillitin®N 85 oder Alcoa®P 15) |
| 50,0 % | Wasser |

In dieser Formulierung konnte auf den Verdicker, der meistens ein schlechteres Resultat beim "Fingerprint" ergab, verzichtet werden.

### Vergleichsbeispiel 1:

### Pflegeemulsion für Glaskeramikfelder(Standard)

| | |
|---|---|
| 38,0 % | nichtionogene, aminofunktionelle Silikonölemulsion, enthaltend 40 % eines Aminosiloxans (1 % N), 2 % PEG-20 Glyceryllaurat, 6 % Cocamidopropylbetain und 52 % Wasser |
| 1,0 % | Esterwachs |
| 38,8 % | Wasser |
| 15,0 % | Abrasiv (Sillitin® N 85 oder Alcoa®P 15) |
| 0,2 % | Verdicker (Carbomer® 140) |
| 2,0 % | Lemonoil |

### Beurteilung der Schutzwirkung mittels "Zuckertest" im direkten Vergleich:

### Prüfmethode:

Dieser Labortest wurde entwickelt um eine Differenzierung und somit eine Beurteilung der einzelnen Wirkstoffe hinsichtlich ihrer Schutzwirkung vornehmen zu können.

### Durchführung:

1) Eine Glaskeramik-Labor-Schutzplatte (SCHOTT) 155 x 155 mm wurde mit Alkohol gereinigt;
2) die Platte wurde mit Klebeband in die entsprechenden Prüffelder aufgeteilt, max. 4 Felder;
3) die zu prüfenden Wirkstoffe oder Formulierungen wurden aufgetragen und auspoliert;
4) das Klebeband wurde entfernt;
5) Beurteilung der Ausreibbarkeit, des Glanzes und der Glätte;
6) eine Heizplatte wurde bei voller Leistung erhitzt und zur besseren Wärmeübertragung eine ebenfalls 155 x 155 mm große Metallplatte aufgelegt;
7) die zu prüfende Glaskeramikplatte wurde auf die Heizeinrichtung gelegt und so lange gewartet, bis die maximale Temperatur erreicht wurde;
8) in jedes Prüffeld wurde nun etwa ½ Teelöffel Zucker gegeben;
9) nachdem der Zucker geschmolzen war und zu karamelisieren begann, wurde die Heizplatte abgeschaltet;
10) nach Erkalten der Glaskeramikplatte wurde der Zucker vorsichtig abgehoben. Hier zeigten sich bereits erste Unterschiede.

### Zuckertest:

### Beurteilung der Formulierungen im direkten Vergleich:

### Beispiel 3:

| | |
|---|---|
| Vergleichsbeispiel 1 | |
| Vergleichsbeispiel 2 | (handelsüblicher Pflegereiniger für Keramikkochplatten) |
| Vergleichsbeispiel 3 | (handelsübliches Pflegemittel für Keramikkochplatten) |

### 1) Zuckerentfernung:

| | |
|---|---|
| leicht | Note 1 |
| schwierig | Note 3 |
| gar nicht (ohne Hilfsmittel) | Note 5 |

### Ergebnis: Mittelwert aus 5 Vergleichsmessungen:

| | |
|---|---|
| Beispiel 3 | 1,0 |
| Vergleichsbeispiel 1 | 1,4 |
| Vergleichsbeispiel 2 | 3,4 |
| Vergleichsbeispiel 3 | 1,8 |

### 2) Rückstand auf dem Glaskeramikfeld:

| | |
|---|---|
| sehr gut | nahezu nicht vorhanden oder leicht abwischbar (1) |
| gut | mit nassem Schwamm und Spülmittel entfernbar (2) |
| befriedigend | mit Scheuermilch entfernbar (3) |
| ausreichend | mit entsprechendem Schaber entfernbar (4) |
| mangelhaft | nur unter Zuhilfenahme von kombinierten Reinigungsmaßnahmen entfernbar (5) |
| ungenügend | nicht entfernbar (6) |

### Ergebnis: Mittelwert aus 5 Vergleichsmessungen:

| | |
|---|---|
| Beispiel 3 | 1,4 |
| Vergleichsbeispiel 1 | 2,4 |
| Vergleichsbeispiel 2 | 4,3 |
| Vergleichsbeispiel 3 | 2,8 |

Es wurden je Formulierung 5 Messungen durchgeführt. Es wurde für jede Messung ein neues Glaskeramikfeld nur einmal mit der entsprechenden Formulierung behandelt, um eine Verfälschung durch einen sich "aufaddierenden Effekt" (Pflegemittelrückstand) zu vermeiden.

Im Qualitätsvergleich der erfindungsgemäßen Formulierung zu den im Handel verfügbaren Produkten, gemessen an Glanz, Pflege und Schutz gegen das Einbrennen von zuckerhaltigen Speisen, zeigte sich, daß alle drei Eigenschaften sehr gut sind. Hervorzuheben ist der Schutz gegen Zuckereinbrennen, da hier die erfindungsgemäße Formulierung den Handelsprodukten deutlich überlegen ist.

Generelle Vorteile der erfindungsgemäßen Formulierung sind darin zu sehen, daß der Einsatz von Verdickern nicht erforderlich war. Die Abrasivstoffe setzten sich nicht ab.

Da es sich um ein W/O-System handelte, war die aufgebrachte Formulierung durch Wasser (feuchtes Abwischen) nicht reemulgierbar.

### Beispiel 4:

### Autopolitur, detergentienbeständig

| | |
|---|---|
| 10,0 % | Aminosiloxan (gemäß Beispiel 1) |
| 15,0 % | aromatenfreies Benzin, (Shellsol®TD) Siedebereich 172 bis 185 °C (ASTM D 1078) |
| 63,0 % | Wasser |
| 5,0 % | Methylsilikonöl (TEGILOXAN®350) |
| 2,0 % | Carnaubawachs |
| 5,0 % | Abrasiv (Sillitin®N 85 oder Alcoa®P 15) |

### Vergleichsbeispiel 4:

### Autopolitur, detergentienbeständig O/W

| | |
|---|---|
| 33,3 % | handelsübliche Esterwachsemulsion 12 %ig (Hoechst) |
| 20,0 % | handelsübliche Aminosiloxanemulsion, enthaltend 35 % Aminosiloxan, 10 % Cocamidopropylbetain, 2 % PEG-20 Glyceryllaurat und 53 % Wasser (TEGO®Polish Additiv (11/59 Emulsion: Aminosiloxan 7 % Aktivgehalt) |
| 41,5 % | Wasser |
| 5,0 % | Abrasiv (Sillitin®N 85 oder Alcoa®P 15) |
| 0,2 % | handelsüblicher Verdicker (Carbomer® 140) |

Der Vergleich des Beispiels 4 mit Vergleichsbeispiel 4 wurde in Anlehnung an "Test 2/86" und an "Qualitätsnormen für die Autopflege und -reinigungsmittel" "SÖFW/Juni 78" durchgeführt und beurteilt.

Ein gebrauchtes lackiertes Autoblech wurde gereinigt und mit den zu prüfenden Autopolituren behandelt. Das aufbereitete Prüfblech wurde über 6 Wochen bewittert. Während dieser Zeit wurde das Prüfblech in regelmäßigen Abständen (2 x je Woche) einer Shampoowäsche unterzogen. Beurteilt wurden folgende Kriterien: Detergentienbeständigkeit, Glanz, Hydrophobie und Abperleffekt.

Nach der Bewitterung und den zwölf Autowäschen zeigte die erfindungsgemäß behandelte Fläche den besten Langzeitschutz.

Im Vergleich zu im Handel verfügbaren Produkten wurde in dem obengenannten Langzeittestverfahren die Detergentienbeständigkeit von 12 Shampoowäschen, Beständigkeit von Glanz, Hydrophobie und Abperleffekt über einen Zeitraum von 6 Wochen Außenbewitterung beurteilt.

Autopolituren, die nur Silikonöl enthielten, zeigten einen deutlichen Qualitätsverlust nach etwa 5 Waschzyklen.

Autopolituren, die die vorgegebene Anzahl von 12 Waschzyklen mit wirklich gutem Ergebnis absolvierten, enthielten 5 % Aminosiloxan.

Das Ergebnis der erfindungsgemäßen Autopolitur war ausgezeichnet. Auch hier kam zur Geltung, daß das W/O-System nicht reemulgierbar war.

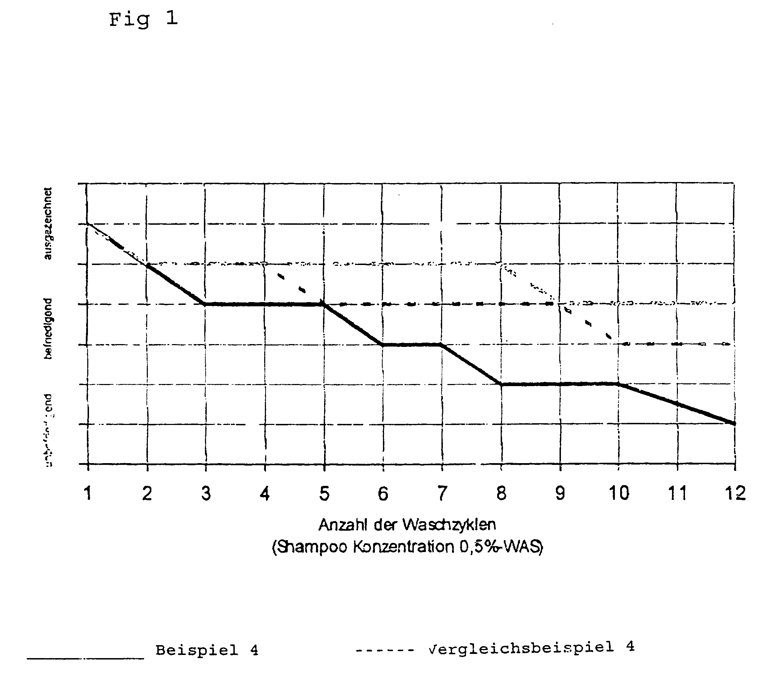

## Patentansprüche

1. W/O-Emulsionen, enthaltend aminofunktionelle Organopolysiloxane der allgemeinen Formeln 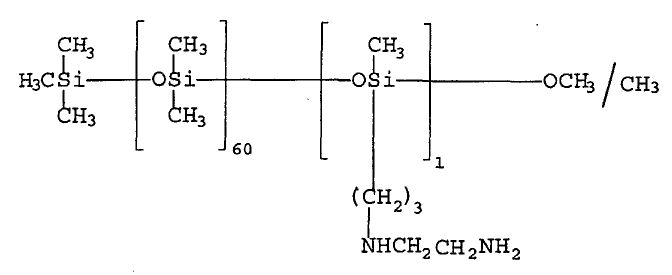 oder

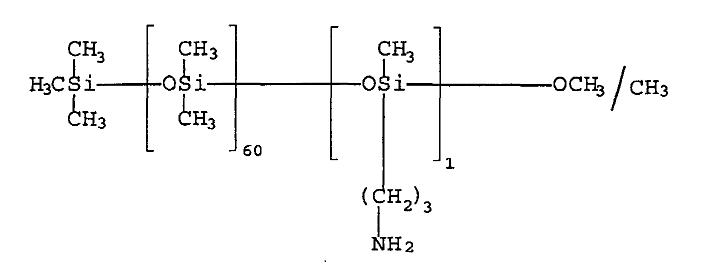

2. Emulsionen nach Anspruch 1, enthaltend 1 bis 60 Gew.-% aminofunktionelle Organosiloxane.

3. Emulsionen nach einem der Ansprüche 1 bis 2, enthaltend keine weiteren Emulgatoren.

4. Emulsionen nach einem der Ansprüche 1 bis 3, umfassend Autopoliturmittel, Reinigungsmittel für Glaskeramikfelder, Textilbehandlungsmittel, Schuhpflegemittel, Kosmetika und Haargel.

## Claims

1. W/O emulsions comprising amino-functional organopolysiloxanes of the general formulae 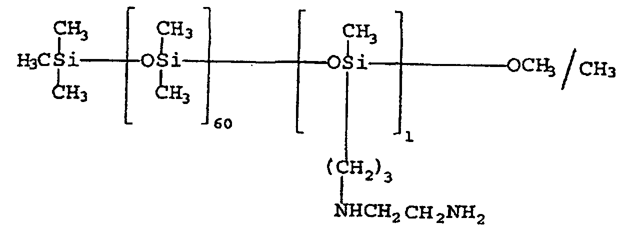 or

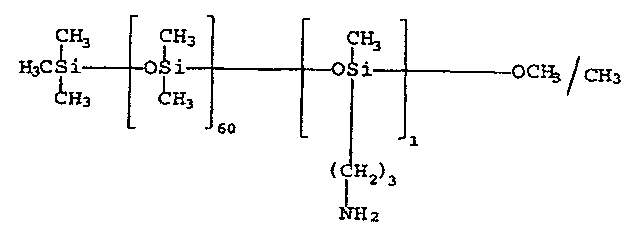

2. Emulsions according to Claim 1, containing from 1 to 60% by weight of amino-functional organosiloxanes.

3. Emulsions according to either of Claims 1 and 2, containing no further emulsifiers.

4. Emulsions according to any of Claims 1 to 3, comprising a car polish, cleaning product for vitroceramic hobs, textile treatment composition, shoecare composition, cosmetic, or hair gel.

## Revendications

1. Emulsions E/H, contenant des organopolysiloxanes à fonctionnalité amino de formule générale 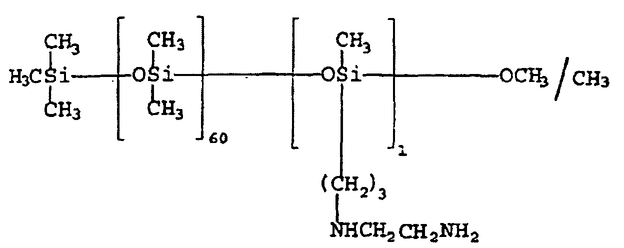 ou

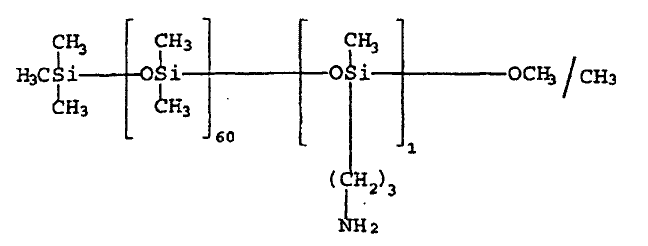

2. Emulsions selon la revendication 1, contenant 1 à 60% en poids d'organosiloxanes à fonctionnalité amino.

3. Emulsions selon l'une quelconque des revendications 1 à 2, ne contenant pas d'autres émulsifiants.

4. Emulsions selon l'une quelconque des revendications 1 à 3, comprenant un agent de polissage pour voiture, des agents de nettoyage pour des zones en céramique de verre, des agents de traitement de textile, des agents d'entretien de chaussures, des produits cosmétiques et des gels pour cheveux.
